# EUROPEAN PATENT SPECIFICATION

(11) **EP 1 093 963 B1**
(45) Date of publication and mention of the grant of the patent: **04.05.2005**
(21) Application number: 00309157.6
(22) Date of filing: 18.10.2000
(51) Int. Cl.: B60P 1/44, F16C 11/04

(54) **Resilient hinge**
Federscharnier
Charnière élastique

(30) Priority: 20.10.1999 GB 9924695
(43) Date of publication of application: 25.04.2001
(73) Proprietor: Ross & Bonnyman Limited, Forfar, Angus DD8 3DG (GB)
(72) Inventor: Sherriff, Andrew Sinclair, Airdrie ML6 ONR (GB)
(74) Representative: Allan, James Stewart

(56) References cited:
- EP-A- 0 314 529
- EP-A- 0 960 771
- GB-A- 2 124 179
- US-A- 4 762 020
- US-A- 5 095 951
- US-A- 5 539 955

## Description

This invention relates to a resilient hinge, particularly for use in connecting two members together so that one can pivot relative to the other. The embodiments of the invention are particularly but not exclusively adaptable for use with hinges attaching ramp extensions onto ramps for tail lifts, but are not limited to such uses.

Typical tail lift platforms are known from GB 2124 179 A or EP 0960 771 A, wherein GB 2124 179A discloses all features of the preamble of claims 1 and 18.

According to the present invention there is provided a tail lift platform having a hinge for pivotally connecting a ramp extension to the platform, the hinge comprising a resilient central portion disposed between two end attachment members, the respective end attachment members being capable of pivotally attaching the ramp extension to the platform.

The invention also provides a tail lift having a ramp attached via a hinge comprising a resilient central portion disposed between two end attachment members, the respective end attachment members being capable of pivotally attaching the ramp to the tail lift.

The resilient central portion is typically a plastics or rubber material which has resilient properties and is capable of bending and/or deforming to different shapes and capable either of remaining in that bent and/or deformed shape or returning to its original shape.

The central portion is typically a flat strip that extends between the end attachment members. The end attachment members typically comprise respective bulbous heads. The heads can typically fit into respective grooves in the members to be pivotally attached, and the grooves can typically have a narrowed throat to resist pull-out of the head from the groove when properly attached.

The end attachment members are typically in the form of bulbous strips having an enlarged cross-section relative to the throat of the groove, and although round cross-sections are typically preferred, the cross-section can be of any shape but typically performs the function of retaining the strip within the throat of the groove.

The resilient central portion preferably extends a fixed distance between the end attachment members and although the resilient central portion can be capable of bending, it is preferably generally resistant to extension so as not to extend the distance between the two end attachment members.

The ramp extension is typically provided with a groove wherein one of the end attachment members of the hinge is engaged in the groove in use. The other end attachment member of the hinge is typically located in a groove provided on the platform.

The platform typically comprises a plurality of planks, and the groove on the platform is typically provided in one of the plurality of planks.

Optionally, the groove can be provided in a kick plate extrusion.

An embodiment of the present invention will now be described by way of example only and with reference to the accompanying drawings, in which:-
Fig. 1 shows side (a) and perspective (b) views of an embodiment of the invention;
Fig. 2 shows two side views (a and b) of a kick plate extrusion on a ramp upon which the Fig. 1 embodiment can be fitted, and an enlarged view (c) of a part of the extrusion of Figs 2a and 2b; and
Fig. 3 shows side (a) and detailed (b and c) views of a ramp extension co-operating with the Fig. 2 kick plate extrusion.

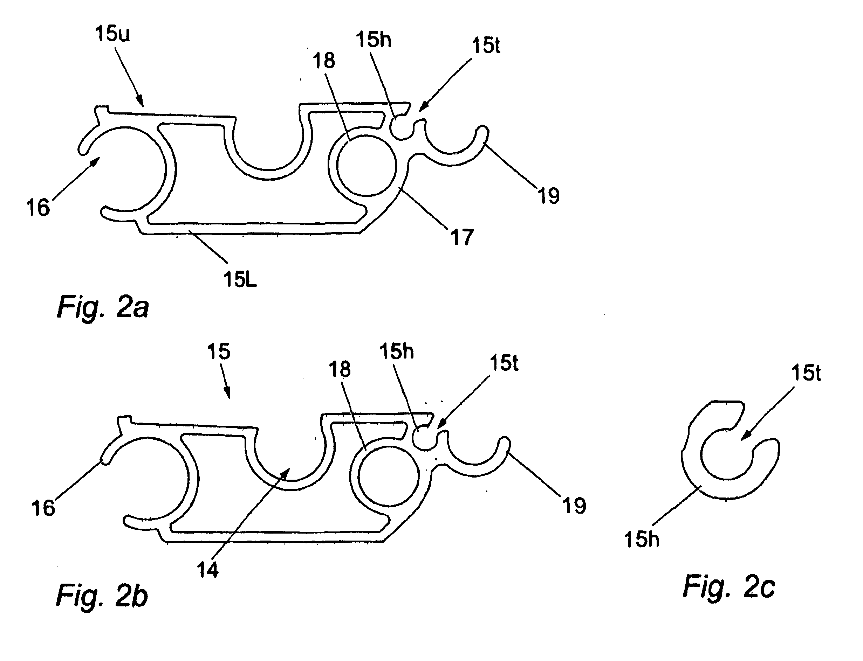

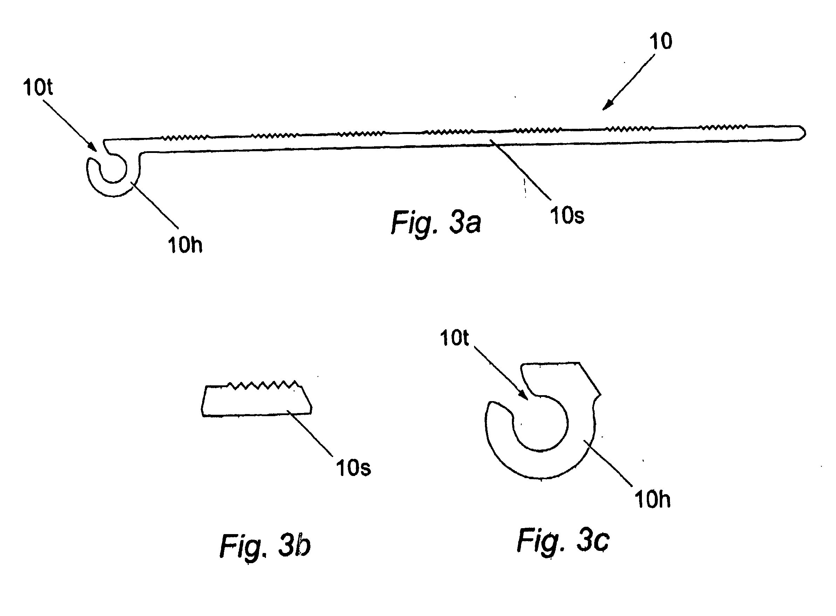

Referring now to the drawings, a hinge of the invention is used to connect a ramp extrusion 10 shown in Fig. 3 to a kick plate extrusion 15 shown in Fig. 2. Referring in particular to Fig. 3, the ramp extrusion 10 comprises a flat strip 10s of suitable width to extend across the breadth of the kick plate extrusion 15, and having a head 10h in the form of a tubular portion running along the length of the flat strip 10s and having a throat 10t open along the length of the tubular head 10h. The throat 10t extends through the ends of the tubular head 10h, so that in side section, the head 10h has a general c-shape shown in detail B of Fig. 3c. The throat 10t is narrower than the widest extent of the inner bore of the head 10h for reasons that will be explained later.

The upper surface of the strip 10s has corrugations, serrations or other textures applied to it, typically as shown in detail A of Fig. 3b.

Referring now to Fig. 2, a kick plate extrusion 15 is typically in the form of a plank having an upper surface 15u and a lower surface 151 extending between a rear linear tubular recess 16 extending along the rear face of the plank, and a front surface 17 extending along the front face of the plank. The front surface 17 also has a linear tubular recess 18 extending from one end of the plank to the other, a linear tubular head 15h extending longitudinally along the front edge of the plank between the upper surface 15u and the front surface 17, and a cup 19 extending forwards from the front surface 17 adjacent to the head 15h. The recess 16 allows connection of the plank 15 to a rearward plank of a lifting platform (not shown) by insertion of the head of the rearward plank (not shown) into the recess 16. The remaining bore of the recess 16 is capped (not shown) as is the front recess 18. There is an upper groove 14 on the upper surface 15u for a kick plate (not shown).

At the front end of the plank 15, the tubular head 15h is generally very similar in dimensions to the head 10h, and the cup 19 and is dimensioned to support the lower surface of the head 10h at various pivotal angles of the ramp extrusion 10 relative to the plank 15. The head 15h has a throat 15t which, like the throat 10t, is narrower than the widest measurement of the inner bore of the head 15h.

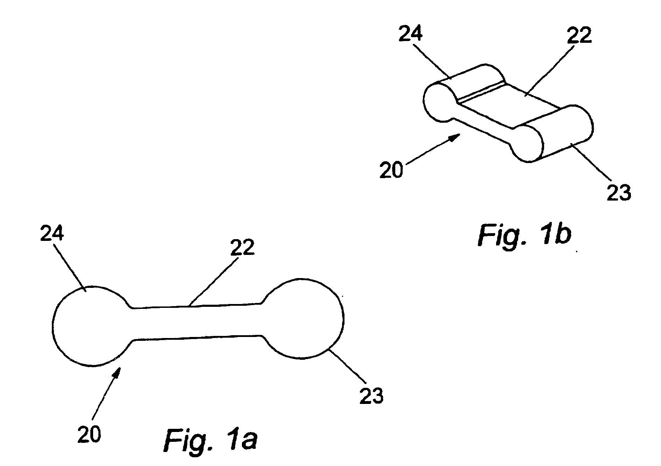

A hinge 20, shown in Fig. 1, is formed from a rubber or plastic material such as EPDM and comprises a longitudinal strip 22 having at each long edge a respective head 23, 24. Heads 23 and 24 are identical, and are in the form of cylindrical bulbous ends to the strip 22, extending along the whole length of the long edges of the strip 22.

The strip 22 can typically bend in the direction of the arrow A in Fig. 1 so as to be flexible, but is typically resilient to extension or compression in the direction of arrow B.

In use, one end of the head 24 is fed into the end of the head 15h so that the throat 15t retains the head 24 in the inner bore and prevents the head 24 from being pulled out therefrom. The length of the hinge 20 is then fed into the length of the plank 15, and the other head 23 is then fed into the inner bore of the head 10h so that the plank 15 and the ramp 10 are connected pivotally by the hinge 20. End caps (not shown) can seal the ends of the inner bores of the heads 15h and 10h, thereby preventing movement of the hinge 20 in the grooves.

The resilience of the strip 22 allows the ramp 10 to pivot freely relative to the plank 15 while holding it captive. The typical resting position of the ramp 10 is with the head 10h resting in the cup 19 and the strip 10s pivoting down to the ground in front of the front face 17 of the plank. However, for storage or convenience, the ramp 10 can be moved from that position through around 270° to lie flat along the upper surface 15u of the plank 15. Therefore, the hinge 20 permits pivoting through a wide angle and certain embodiments omit the complexities of conventional hinges.

Modifications and improvements can be incorporated without departing from the scope of the invention.

## Claims

1. A tail lift platform having a hinge (20) for pivotally connecting a ramp extension (10) to the platform **characterized in that** the hinge comprises a resilient central portion (22) disposed between two end attachment members (23,24), the respective end attachment members being capable of pivotally attaching the ramp (10) extension to the platform.

2. A platform according to claim 1, wherein the resilient central (22) portion is a plastics or rubber material which has resilient properties.

3. A platform according to either preceding claim, wherein the hinge is capable of bending and/or deforming to different shapes.

4. A platform according to claim 3, wherein the hinge is capable of either remaining in the bent and/or deformed shape or returning to its original shape.

5. A platform according to any preceding claim, wherein the resilient central portion (22) extends a fixed distance between the end attachment members (23,24).

6. A platform according to any preceding claim, wherein the resilient central portion (22) is capable of bending.

7. A platform according to any preceding claim, wherein the resilient central portion is generally resistant to extension so as not to extend the distance between the two end attachment members.

8. A platform according to any preceding claim, wherein the central portion is a flat strip that extends between the end attachment members.

9. A platform according to any preceding claim, wherein the end attachment members (23,24) comprise respective bulbous heads.

10. A platform according to claim 9, wherein the heads can fit into respective grooves (15h) in the members to be pivotally attached.

11. A platform according to claim 10, wherein the grooves (15h) have a narrowed throat (15t) to resist pull-out of the head from the groove when properly attached.

12. A platform according to claim 11, wherein the heads are in the form of bulbous strips having an enlarged cross-section relative to the throat of the groove.

13. A platform according to claim 12, wherein the cross-section of the strip is substantially circular.

14. A platform according to any preceding claim, wherein the ramp extension (10) is provided with a groove (10t) wherein one of the end attachment members (23,24) of the hinge (20) is engaged in the groove in use.

15. A platform according to claim 14, wherein the other end attachment member (23,24) of the hinge is located in a groove (15h) provided on the platform.

16. A platform according to claim 15, wherein the platform comprises a plurality of planks (15), and the groove is provided in one of the plurality of planks.

17. A platform according to claim 15 or claim 16, wherein the groove is provided in a kick plate extrusion.

18. A tail lift having a ramp (10) attached via a hinge (20) according to any preceding claim.

## Patentansprüche

1. Eine Hebebühnenplattform, die ein Drehgelenk (20) aufweist, um eine Rampenverlängerung (10) mit der Plattform schwenkbar zu verbinden, **dadurch gekennzeichnet, dass** das Drehgelenk einen elastischen zentralen Abschnitt (22), der zwischen zwei Endbefestigungselementen (23, 24) angeordnet ist, beinhaltet, wobei die jeweiligen Endbefestigungselemente die Verlängerung der Rampe (10) an der Plattform schwenkbar befestigen können.

2. Plattform gemäß Anspruch 1, wobei der elastische zentrale (22) Abschnitt ein Kunststoff- oder Kautschukmaterial ist, das elastische Eigenschaften aufweist.

3. Plattform gemäß einem der vorhergehenden Ansprüche, wobei sich das Drehgelenk in verschiedene Formen biegen und/oder verformen kann.

4. Plattform gemäß Anspruch 3, wobei das Drehgelenk entweder in der gebogenen und/oder verformten Form bleiben oder in seine ursprüngliche Form zurückgehen kann.

5. Plattform gemäß einem der vorhergehenden Ansprüche, wobei sich der elastische zentrale Abschnitt (22) um einen festgelegten Abstand zwischen den Endbefestigungselementen (23, 24) erstreckt.

6. Plattform gemäß einem der vorhergehenden Ansprüche, wobei sich der elastische zentrale Abschnitt (22) biegen kann.

7. Plattform gemäß einem der vorhergehenden Ansprüche, wobei der elastische zentrale Abschnitt im Allgemeinen gegen Verlängerung beständig ist, um den Abstand zwischen den zwei Endbefestigungselementen nicht zu verlängern.

8. Plattform gemäß einem der vorhergehenden Ansprüche, wobei der zentrale Abschnitt ein flacher Streifen ist, der sich zwischen den Endbefestigungselementen erstreckt.

9. Plattform gemäß einem der vorhergehenden Ansprüche, wobei die Endbefestigungselemente (23, 24) jeweilige kugelförmigen Köpfe beinhalten.

10. Plattform gemäß Anspruch 9, wobei die Köpfe in jeweilige Rillen (15h) in den Elementen, die schwenkbar befestigt werden sollen, passen können.

11. Plattform gemäß Anspruch 10, wobei die Rillen (15h) einen verengten Hals (15t) aufweisen, um dem Herausziehen des Kopfes aus der Rille bei richtiger Befestigung zu widerstehen.

12. Plattform gemäß Anspruch 11, wobei die Köpfe in Form von kugelförmigen Streifen vorliegen, die relativ zu dem Hals der Rille einen vergrößerten Querschnitt aufweisen.

13. Plattform gemäß Anspruch 12, wobei der Querschnitt das Streifens im Wesentlichen kreisförmig ist.

14. Plattform gemäß einem der vorhergehenden Ansprüche, wobei die Rampenverlängerung (10) mit einer Rille (10t) versehen ist, wobei eines der Endbefestigungselemente (23, 24) des Drehgelenks (20) im Gebrauch mit der Rille in Eingriff steht.

15. Plattform gemäß Anspruch 14, wobei sich das andere Endbefestigungselement (23, 24) des Drehgelenks in einer auf der Plattform bereitgestellten Rille (15h) befindet.

16. Plattform gemäß Anspruch 15, wobei die Plattform eine Vielzahl von Bohlen (15) beinhaltet und die Rille in einer der Vielzahl von Bohlen bereitgestellt ist.

17. Plattform gemäß Anspruch 15 oder Anspruch 16, wobei die Rille in einer Extrusion einer Sockelleiste bereitgestellt ist.

18. Eine Hebebühne mit einer Rampe (10), die mittels eines Drehgelenks (20) gemäß einem der vorhergehenden Ansprüche befestigt ist.

## Revendications

1. Une plate-forme de hayon élévateur ayant une charnière (20) destinée à raccorder de façon pivotante une extension de rampe (10) à la plate-forme **caractérisée en ce que** la charnière comporte une portion centrale élastique (22) disposée entre deux éléments d'attache d'extrémités (23, 24), les éléments d'attache d'extrémités respectifs étant capables d'attacher de façon pivotante l'extension de rampe (10) à la plate-forme.

2. Une plate-forme selon la revendication 1, dans laquelle la portion centrale (22) élastique est un matériau en plastique ou en caoutchouc qui possède des propriétés élastiques.

3. Une plate-forme selon l'une ou l'autre revendication précédente, dans laquelle la charnière est capable de fléchir et/ou de se déformer selon différentes configurations.

4. Une plate-forme selon la revendication 3, dans laquelle la charnière est capable soit de rester dans la configuration fléchie et/ou déformée, soit de retrouver sa configuration d'origine:

5. Une plate-forme selon n'importe quelle revendication précédente, dans laquelle la portion centrale élastique (22) s'étend à une distance fixe entre les éléments d'attache d'extrémités (23, 24).

6. Une plate-forme selon n'importe quelle revendication précédente, dans laquelle la portion centrale élastique (22) est capable de fléchir.

7. Une plate-forme selon n'importe quelle revendication précédente, dans laquelle la portion centrale élastique résiste généralement à l'extension de façon à ne pas étendre la distance entre les deux éléments d'attache d'extrémités.

8. Une plate-forme selon n'importe quelle revendication précédente, dans laquelle la portion centrale est une bande plate qui s'étend entre les éléments d'attache d'extrémités.

9. Une plate-forme selon n'importe quelle revendication précédente, dans laquelle les éléments d'attache d'extrémités (23, 24) comportent des têtes en forme de boule respectives.

10. Une plate-forme selon la revendication 9, dans laquelle les têtes peuvent s'emboîter dans des gorges respectives (15h) dans les éléments devant être attachés de façon pivotante.

11. Une plate-forme selon la revendication 10, dans laquelle les gorges (15h) ont un étranglement rétréci (15t) pour résister à l'extraction de la tête de la gorge lorsqu'elle est attachée correctement.

12. Une plate-forme selon la revendication 11, dans laquelle les têtes se présentent sous la forme de bandes en forme de boule ayant une coupe transversale agrandie par rapport à l'étranglement de la gorge.

13. Une plate-forme selon la revendication 12, dans laquelle la coupe transversale de la bande est substantiellement circulaire.

14. Une plate-forme selon n'importe quelle revendication précédente, dans laquelle l'extension de rampe (10) est munie d'une gorge (10t) dans laquelle un des éléments d'attache d'extrémités (23, 24) de la charnière (20) est engagé dans la gorge en utilisation.

15. Une plate-forme selon la revendication 14, dans laquelle l'autre élément d'attache d'extrémités (23, 24) de la charnière est situé dans une gorge (15h) fournie sur la plate-forme.

16. Une plate-forme selon la revendication 15, dans laquelle la plate-forme comporte une pluralité de planches (15), et la gorge est fournie dans une planche parmi la pluralité de planches.

17. Une plate-forme selon la revendication 15 ou la revendication 16, dans laquelle la gorge est fournie dans une extrusion de plaque de poussée.

18. Un hayon élévateur ayant une rampe (10) attachée par le biais d'une charnière (20) selon n'importe quelle revendication précédente.
